# EUROPÄISCHE PATENTSCHRIFT

(11) **EP 1 953 069 B1**
(45) Veröffentlichungstag und Bekanntmachung des Hinweises auf die Patenterteilung: **20.10.2010**
(21) Anmeldenummer: 07025238.2
(22) Anmeldetag: 29.12.2007
(51) Int. Cl.: B62D 51/04, B66F 9/075

(54) **Flurförderzeug für den Mitfahrbetrieb**
Industrial truck for ride-along operation
Chariot de manutention pour un fonctionnement simultané

(30) Priorität: 30.01.2007 DE 102007004481
(43) Veröffentlichungstag der Anmeldung: 06.08.2008
(73) Patentinhaber: Jungheinrich Aktiengesellschaft, 22047 Hamburg (DE)
(72) Erfinder: Niebuhr, Michael, 22941 Bargteheide (DE)
(74) Vertreter: Hauck Patent- und Rechtsanwälte

(56) Entgegenhaltungen:
- DE-A1- 19 518 116
- GB-A- 1 206 030
- GB-A- 1 376 868
- US-A1- 2006 061 122

## Beschreibung

Die Erfindung bezieht sich auf ein Flurförderzeug für den Mitfahrbetrieb nach Patentanspruch 1.

Bei Flurförderzeugen unterscheidet man generell zwischen Mitgeh- und Mitfahr-Flurförderzeugen. Mitgeh-Flurförderzeuge werden zumeist von einer Deichsel betätigt, an deren Kopf Bedienelemente für das Fahrzeug vorgesehen sind, wobei die Lenkung durch eine Deichselschwenkbewegung erfolgt. Mitfahr-Fahrzeuge mit Deichsellenkung sind ebenfalls bekannt. Bei diesen steht der Bediener auf einer Plattform oder betätigt sitzend die Funktionen des Fahrzeugs. Typischerweise sind deichselgelenkte Mitgeh-Flurförderzeuge kompakter als Mitfahr-Fahrzeuge.

Dokument DE 195 18 116 A1 offenbart den Oberbegriff des Anspruchs 1.

Der Erfindung liegt die Aufgabe zugrunde, ein Flurförderzeug für den Mitfahrbetrieb zu schaffen, dessen Abmessungen und Arbeitsgangbreiten nicht oder nicht wesentlich über übliche Flurförderzeuge mit Deichselbedienung für den Mitgängerbetrieb liegen. Die intuitive Bedienung und das Arbeiten sowohl in Antriebs- als auch in Lastrichtung sollen ähnlich gut sein, wie bei konventionellen Deichselgeräten für den Mitgängerbetrieb.

Diese Aufgabe wird durch die Merkmale des Patentanspruchs 1 gelöst.

Bei dem erfindungsgemäßen Flurförderzeug ist die Plattform im Rahmen des Fahrzeugs um eine vertikale Achse drehbar gelagert. Die Plattform wird von geeigneten Drehantriebs- bzw. Fahrantriebsmitteln in eine gewünschte Winkellage gegenüber dem Rahmen verdreht. Mindestens ein Antriebsrad ist unterhalb der Plattform gelagert. Die Bedienelemente sind an einem mit der Plattform verbundenen hochstehenden Teil angebracht. Die Lenkung erfolgt mit Hilfe der Drehantriebs- bzw. Fahrantriebsmittel.

In den dem Lastaufnahmemittel abgewandten Teil des erfindungsgemäßen Flurförderzeugs befindet sich eine drehbare Plattform, an der mindestens ein Antriebsrad angebracht und von einem geeigneten Antrieb antreibbar ist. An der drehbaren Plattform erstreckt sich ein Teil zur Oberseite des Flurförderzeugs und bildet dort einen Fahrstand für die Bedienung des Flurförderzeugs. Der Fahrstand ist kompakt und für stehende Bedienung geeignet, wobei auch eine sitzende Bedienung denkbar ist, was jedoch die Abmessungen des Flurförderzeugs entsprechend größer ausfallen läßt.

Bei der Erfindung ist der Fahrstand Teil eines Rotationskörpers, der dicht an feststehenden Teilen des Flurförderzeugs, die sich oberhalb des Bodens des Fahrstands befindet, angeordnet ist. Der Bediener kann den Fahrstand von der offenen Seite her betreten. Im Bereich innerhalb des Fahrstands, der nicht vom Bediener eingenommen wird, können erforderliche Bauteile des Flurförderzeugs, wie z.B. elektronische Steuerungen und Batterien untergebracht sein.

Die Besonderheit bei der Erfindung ist darin zu sehen, daß die Lenkung des Flurförderzeugs dadurch erfolgt, daß der Fahrstand relativ zum Rahmen des Flurförderzeugs, der insoweit stationär zum Lastaufnahmemittel ist, um eine Hochachse gedreht wird. Diese Drehung kann um 360° oder n mal 360° erfolgen.

Nach einer Ausgestaltung der Erfindung ist das hochstehende Teil als nach außen gewölbte Schürze geformt, die im Randbereich der kreisförmigen Plattform angebracht ist. Die Schürze kann nach einer weiteren Ausgestaltung der Erfindung im oberen Bereich radial aufgeweitet sein. Die Schürze ist allgemein im Querschnitt kreisbogenförmig ausgebildet sein.

Nach einer anderen Ausgestaltung der Erfindung ist die kreisförmige Plattform von einem Rahmenabschnitt ringförmig umschlossen. Vorzugsweise liegt die kreisförmige Plattform mit ihrer Oberseite auf gleicher Höhe wie der umgebende Rahmenabschnitt.

Ist nach einer Ausgestaltung der Erfindung an der Unterseite der Plattform ein Paar koaxialer Antriebsräder angeordnet, kann eine Drehung der Plattform dadurch erreicht werden, daß die Antriebsräder gegensinnig von getrennten Antrieben getätigt werden. Auf diese Weise kann auch eine Änderung der Fahrtrichtung erreicht werden. Um die Fahrtrichtung zu wechseln, wird eine Drehung der Plattform um 180° vorgenommen oder wie an sich üblich eine Drehrichtungsumkehr des Antriebs. Zur besseren Abstützung der Plattform können nach einer weiteren Ausgestaltung der Erfindung im Umfangsabstand zu den Antriebsrädern auch Nachlaufrollen an der Plattform oder dem Rahmenabschnitt gelagert sein.

Wird hingegen nach einer anderen Ausgestaltung der Erfindung ein einziges Antriebsrad annähernd mittig unterhalb der Plattform gelagert, ist ein separater Drehantrieb für die Plattform vorgesehen. Der Drehantrieb kann sich entweder an der Plattform befinden oder auch im Rahmen untergebracht sein.

Wie schon erwähnt, erfolgt die Bedienung des erfindungsgemäßen Flurförderzeugs vom hochstehenden Teil des Fahrstands. Zu diesem Zweck kann nach einer Ausgestaltung der Erfindung ein Griff am hochstehenden Teil für jede Hand angebracht sein, an dem Bedienelemente für den Antriebsmotor, die Drehantriebsmittel oder dergleichen angeordnet sind. Die Griffe können auch gleichzeitig Haltegriffe für die Bedienungsperson sein.

Nach einer Ausgestaltung der Erfindung können die Griffe als zur Mitte in ragende Hörner ausgebildet sein. In diesem Zusammenhang kann vorgesehen werden, daß die Griffe als umgebogene Endabschnitte einer feststehenden zum hochstehenden Teil hin gebogene Stange ausgebildet sein. Die Bedienelemente können von drehbaren Griffabschnitten der Griffe gebildet sein, von Daumenschaltem oder ähnlichen Bedienelementen.

Die Erfindung wird nachfolgend anhand von Zeichnungen näher erläutert.
- Fig. 1: zeigt perspektivisch ein Flurförderzeug nach der Erfindung bei einer Fahrt in Antriebsrichtung.

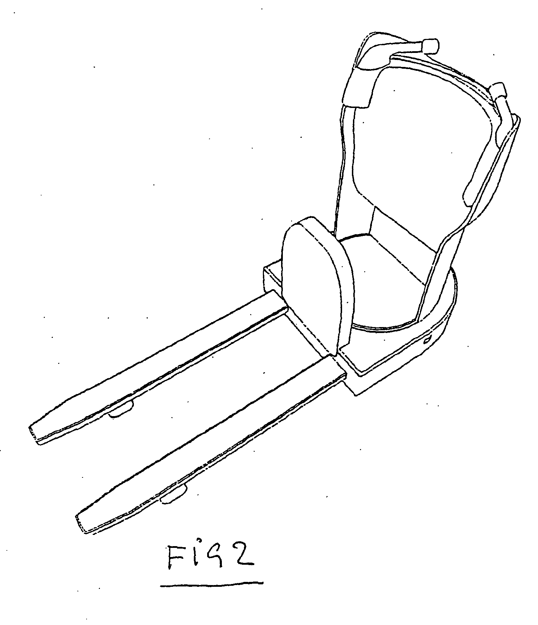

- Fig. 2: zeigt perspektivisch das Flurförderzeug nach Fig. 2 vom Lastteil aus ohne Bedienungsperson.
- Fig. 3: zeigt das Flurförderzeug nach Fig. 1 in Vorderansicht.

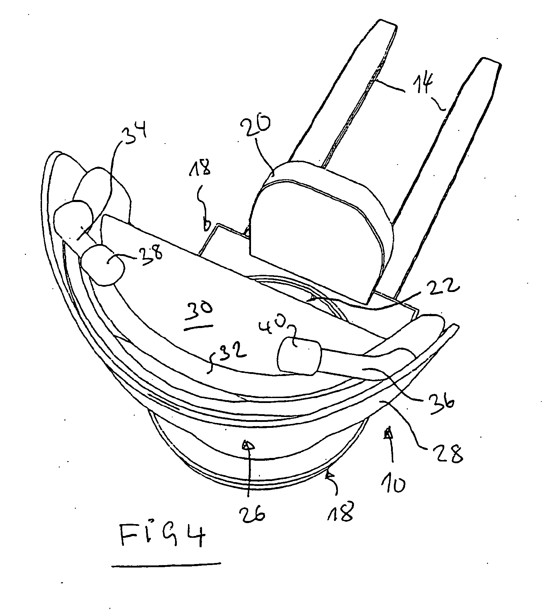

- Fig. 4: zeigt das Flurförderzeug nach Fig. 2 perspektivisch von der Vorderseite.
- Fig. 5: zeigt perspektivische Ansichten des Flurförderzeugs nach den Fign. 1 bis 4 in zwei entgegengesetzten Fahrtrichtungen.
- Fig. 6: zeigt perspektivisch den Rahmen- und Lastteil des Flurförderzeugs nach den Fign. 1 bis 5.
- Fig. 7: zeigt eine ähnliche Anordnung wie Fig. 6 mit zusätzlichen Lenkrollen.

In den Figuren ist ein Niederhub-Flurförderzeug 10 dargestellt. Es weist eine Paar Radarme 14 als Lastaufnahmemittel auf mit jeweils einem Lastrad 16 am vorderen Ende. Die Radarme 14 sind an einem Rahmenabschnitt 18 angebracht. Er kann durch eine nicht gezeigte Hubvorrichtung um einen bestimmten Hub ausgefahren werden, wobei die Lasträder 16, die an Schwingen gelagert sind, gegenüber den Radarmen 14 nach unten bewegt werden, wie dies allgemein bekannt ist in Verbindung mit Niederhub-Flurförderzeugen. Daher sind Einzelheiten nicht dargestellt und werden auch nicht weiter beschrieben.

Angrenzend an die Radarme 14 ist ein hochstehendes Teil 20 am Rahmenabschnitt 18 angebracht. Der Rahmenabschnitt 18 umgibt mit einem Ringabschnitt eine kreisförmige Stehplattform 22, deren Oberseite annähernd auf gleicher Höhe liegt wie die flache Oberseite des Rahmenabschnitts 18. Die Stehplattform 22 ist um eine vertikale Achse drehbar im Rahmenabschnitt 18 gelagert. Auf dieser steht eine Bedienungsperson 24, wenn sie das Flurförderzeug 10 bedient.

An dem Rand der Stehplattform 22 ist eine nach oben stehende Schürze 26 angebracht. Sie hat Kreisbogenform und erweitert sich im oberen Bereich radial, wie bei 28 zu erkennen. Auf der Innenseite des erweiterten Abschnitts 28 befindet sich ein Bedientableau 30, das nicht gezeigte Bedienelemente und Anzeigevorrichtungen enthalten kann. Außerdem ist oberhalb des Tableaus 30 nahe der Erweiterung 28 der Schürze 26 eine kreisbogenförmig gebogene Stange 32 angeordnet, die annähernd in einer horizontalen Ebene liegt und an den Enden nach innen zurückgebogene Hörner 34, 36 aufweist, an deren Enden in Form von Drehgriffen Fahrschalter 38, 40 drehbar gelagert sind.

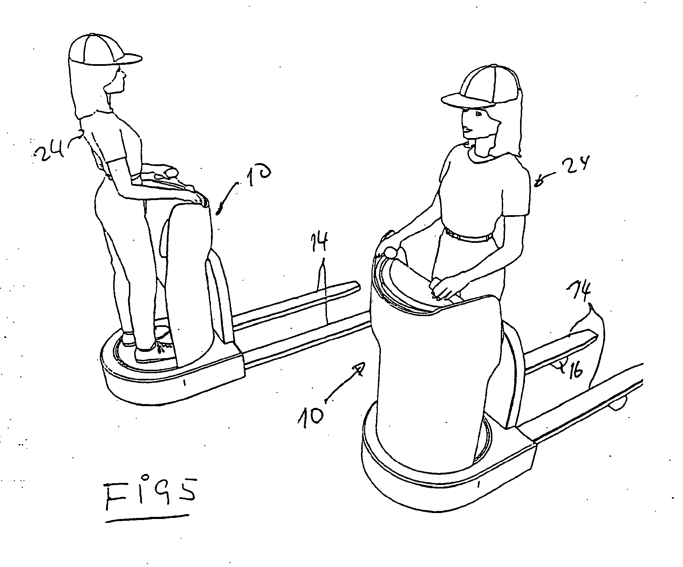

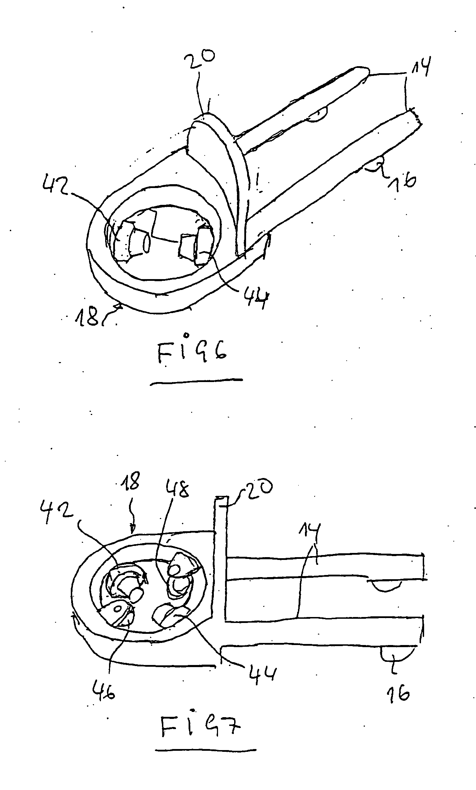

Die Stehplattform 22 ist um 360° oder n-mal 360° drehbar. Daher kann die Bedienperson im Hinblick auf die Ausrichtung des Flurförderzeugs unterschiedliche Orientierungen haben, wie dies anhand von Figur 5 dargestellt ist. In der linken Darstellung ist die Blickrichtung zu den Radarmen 14 und in der rechten Darstellung in entgegengesetzter Richtung. Eine Verdrehung der Stehplattform 22 wird z.B. durch zwei Antriebsräder 42, 44 bewirkt (Figuren 6 und 7), die an der Unterseite der Stehplattform 22 gelagert und von jeweils einem Antrieb angetrieben sind. Die Antriebsräder 42, 44 liegen auf gleicher Achse und können in beiden Drehrichtungen angetrieben werden. Bei unterschiedlichen Drehzahlen oder entgegengesetzten Drehrichtungen kommt es zu einer Verdrehung der Stehplattform 22. Es ist daher möglich, über die Drehung der Stehplattform 22 das Flurförderzeug 10 zu lenken, während es gleichzeitig angetrieben ist. Es ist natürlich auch denkbar, ein einzelnes Antriebsrad an der Unterseite der Stehplattform 22 zu lagern und einen anderen Drehantrieb für die Stehplattform vorzusehen, um eine Lenkung zu bewerkstelligen.

In Figur 7 ist gezeigt, wie am Rahmenabschnitt 18 Lenkrollen 46, 48 angebracht sind, um das Fahrzeug zu stabilisieren. Die Lenkrollen 46, 48 sind um jeweils 90° versetzt zu den Antriebsrädern 42, 44 angeordnet.

Der Antriebsmotor befindet sich vorzugsweise in bzw. unterhalb der Stehplattform 22, während die Batterie auf der Innenseite der Schürze 26 angeordnet ist.

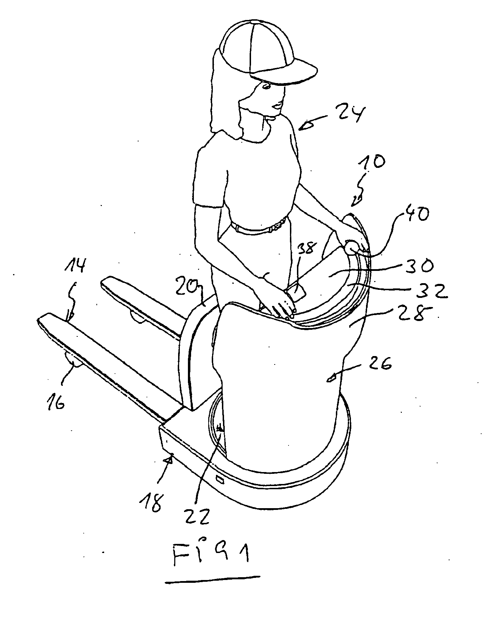

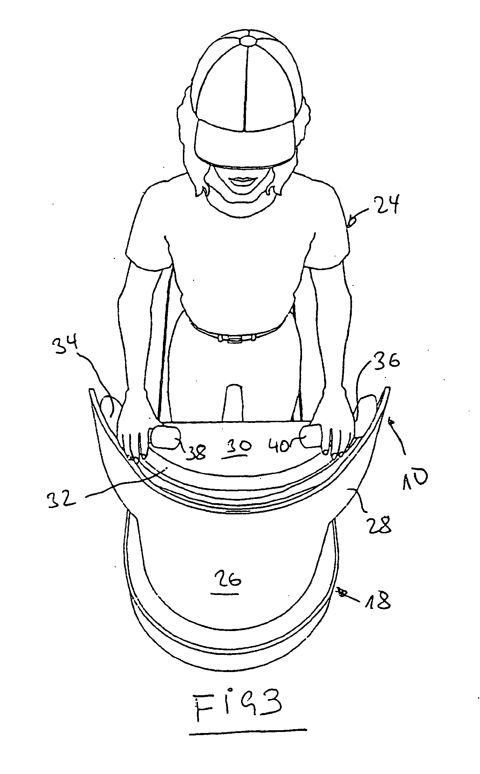

Wie aus den Figuren 1, 3 und 5 zu erkennen, kann sich die Bedienungsperson 24 an den Hörnern 34, 36 festhalten, um während der Fahrt einen sicheren Stand zu behalten. Die Bedienungsperson kann außerdem die Stange 32 erfassen, um sich zu sichern.

Wie erkennbar, ist ein Flurförderzeug im Mitfahrbetrieb dargestellt, dessen Abmessungen und Arbeitsgangbreiten nicht oder nicht wesentlich über das eines üblichen Flurförderzeugs mit Deichselbetrieb für den Mitgängerbetrieb liegen. Eine intuitive Bedienung und das Arbeiten sowohl in Antriebs- als auch in Lastrichtung sind ähnlich gut wie bei einem konventionellen Deichselgerät. Der Fahrstand ist kompakt und für die stehende Bedienung ausgelegt und umschließt im wesentlichen den Raum den ein stehender Bediener einnimmt. Der Bediener kann den Fahrstand von der offenen Seite her betreten. Eine Lenkfunktion kann z.B. durch ein einseitiges Verschwenken der Stange 32 nach links oder rechts um einen bestimmten Betrag betätigt werden. Der Ausschlagwinkel gibt dabei die Geschwindigkeit der Lenkbewegung vor. In der Neutralstellung stoppt die Drehbewegung der Stehplattform 22. Ein Fahrtrichtungswechsel kann etwa durch eine Lenkungsdrehung um 180° ermöglicht werden.

## Patentansprüche

1. Flurförderzeug (10) für den Mitfahrbetrieb mit einem Lastaufnahmemittel (14), das mittels einer Hubvorrichtung an einem Rahmend (18) höhenverstellbar ist und mindestens einem lenkbaren von einem Antriebsmotor angetriebenen Antriebsrad (42), einer Plattform (22) für eine Bedienperson (24) und Bedienelemente für den Antriebsmotor, die Lenkung des Antriebsrades, die Hubvorrichtung und dergleichen, wobei die Plattform (22) im Rahmen (18) um eine vertikale Achse drehbar gelagert und von einem Drehantriebsmittel in eine gewünschte Winkellage gegenüber dem Rahmen (18) bringbar ist, mindestens ein Antriebsrad an der Unterseite der Plattform (22) gelagert ist, die Bedienelemente an einem an der Plattform (22) angebrachten hochstehendem Teil (26) vorgesehen sind, **dadurch gekennzeichnet, daß** die Lenkung mit Hilfe des Drehantriebsmittels erfolgt.

2. Flurförderzeug nach Anspruch 1, **dadurch gekennzeichnet, daß** die Plattform (22) um 360° oder mehr drehbar gelagert ist.

3. Flurförderzeug nach Anspruch 1 oder 2, **dadurch gekennzeichnet, daß** die Plattform kreisförmig ist und daß das hochstehende Teil (26) als nach außen gewölbte Schürze geformt ist, die im Randbereich der kreisförmigen Plattform (22) angebracht ist.

4. Flurförderzeug nach Anspruch 3, **dadurch gekennzeichnet, daß** die Schürze (26) im Querschnitt kreisbogenförmig ist.

5. Flurförderzeug nach Anspruch 4, **dadurch gekennzeichnet, daß** die Schürze (26) einen oberen radial aufgeweiteten Bereich (28) aufweist.

6. Flurförderzeug nach einem der Ansprüche 1 bis 5, **dadurch gekennzeichnet, daß** die Plattform kreisförmig ist und daß die kreisförmige Plattform (22) von einem Rahmenabschnitt ringförmig umschlossen ist.

7. Flurförderzeug nach einem der Ansprüche 1 bis 6, **dadurch gekennzeichnet, daß** die Plattform kreisförmig ist und daß die kreisförmige Plattform (22) annähernd die gleiche Höhe wie die Oberseite des die Plattform (22) umgebenden Rahmenabschnitts (18) aufweist.

8. Flurförderzeug nach einem der Ansprüche 1 bis 7, **dadurch gekennzeichnet, daß** an der Plattform (22) zwei koaxial angeordnete Antriebsräder (42, 44) gelagert sind, die von getrennten Antriebsmotoren antreibbar sind.

9. Flurförderzeug nach Anspruch 8, **dadurch gekennzeichnet, daß** an der Plattform (22) oder am Rahmenabschnitt (18) im Umfangsabstand der Antriebsräder (42, 44) Nachlaufrollen (46, 48) gelagert sind.

10. Flurförderzeug nach einem der Ansprüche 1 bis 7, **dadurch gekennzeichnet, daß** ein einziges Antriebsrad annähernd mittig unterhalb der Plattform (22) gelagert und ein separater Drehantrieb für die Plattform (22) vorgesehen ist.

11. Flurförderzeug nach einem der Ansprüche 1 bis 10, **dadurch gekennzeichnet, daß** am hochstehenden Teil (26) für jede Hand ein Griff angebracht ist, an dem Bedienelemente für den Antriebsmotor und die Drehantriebsmittel angeordnet sind.

12. Flurförderzeug nach Anspruch 11, **dadurch gekennzeichnet, daß** die Griffe als zur Mitte ragende Hörner (36, 38) ausgebildet sind.

13. Flurförderzeug nach Anspruch 11 oder 12, **dadurch gekennzeichnet, daß** die Griffe als zur Mitte zurückgebogene Endabschnitte einer zum hochstehenden Teil (26) hin gebogenen Stange (32) ausgebildet sind.

14. Flurförderzeug nach einem der Ansprüche 11 bis 13, **dadurch gekennzeichnet, daß** die Bedienelemente als Daumenschalter ausgeführt sind.

## Claims

1. Ground conveyor (10) for ride-along operation with a load-bearing means (14), which is adjustable in height by means of a lifting device on a frame (18) and at least one steerable drive wheel (42) driven by a drive motor, a platform (22) for an operator (24) and control elements for the drive motor, the steering of the drive wheel, the lifting device and suchlike, wherein the platform (22) in the frame (18) is swivel mounted on a vertical axis and can be positioned in a desired angle position with respect to the frame by a rotating drive means, at least one drive wheel is mounted on the bottom side of the platform (22), the control elements are provided on an upright part (26) attached to the platform (22), **characterized in that** the steering takes place with the help of the rotating drive means.

2. Ground conveyor according to claim 1, **characterized in that** the platform (22) is swivel mounted at 360° or more.

3. Ground conveyor according to claim 1 or 2, **characterized in that** the platform is circular and that the upright part (26) is shaped like an outwardly curved skirt, which is attached in the edge area of the circular platform (22).

4. Ground conveyor according to claim 3, **characterized in that** the skirt (26) has a circular-arc-shaped cross-section.

5. Ground conveyor according to claim 4, **characterized in that** the skirt (26) has an upper radially extended area (28).

6. Ground conveyor according to one of claims 1 through 5, **characterized in that** the platform is circular and that the circular platform (22) is surrounded in a circular manner by a frame section.

7. Ground conveyor according to one of claims 1 through 6, **characterized in that** the platform is circular and that the circular platform (22) almost has the same height as the top side of the frame section (18) surrounding the platform (22).

8. Ground conveyor according to one of claims 1 through 7, **characterized in that** two coaxially arranged drive wheels (42, 44), which can be driven by separate drive motors, are mounted on the platform (22).

9. Ground conveyor according to claim 8, **characterized in that** castor rollers (46, 48) are mounted on the platform (22) or on the frame section (18) in the circumferential distance of the drive wheels (42, 44).

10. Ground conveyor according to one of claims 1 through 7, **characterized in that** one single drive wheel is mounted close to the middle below the platform (22) and a separate rotating drive is provided for the platform (22).

11. Ground conveyor according to one of claims 1 through 10, **characterized in that** one grip for each hand is attached to the upright part (26), on which control elements are arranged for the drive motor and the rotating drive means.

12. Ground conveyor according to claim 11, **characterized in that** the grips are designed as horns (36, 38) projecting towards the middle.

13. Ground conveyor according to claim 11 or 12, **characterized in that** the grips are designed as end sections of a rod (32) bent towards the upright part (26) and back towards the middle.

14. Grpound conveyor according to one of claims 11 through 13, **characterized in that** the control elements are designed as thumb switches.

## Revendications

1. Chariot de manutention (10) pour un fonctionnement simultané, avec un moyen de support de charge (14) qui est réglable en hauteur sur un cadre (18) au moyen d'un dispositif de levage, et avec au moins une roue d'entraînement (42) dirigeable entraînée par un moteur d'entraînement, une plate-forme (22) pour un opérateur (24) et des éléments de manoeuvre pour le moteur d'entraînement, la direction de la roue d'entraînement, le dispositif de levage et éléments similaires, la plate-forme (22) étant supportée dans le cadre (18) en rotation autour d'un axe vertical et pouvant être amenée, par un moyen d'entraînement rotatif, dans une position angulaire souhaitée par rapport au cadre (18), au moins une roue d'entraînement étant supportée sur le dessous de la plate-forme (22), les éléments de manoeuvre étant prévus sur une partie (26) surélevée placée sur la plate-forme (22), **caractérisé en ce que** l'opération de direction est effectuée à l'aide du moyen d'entraînement rotatif.

2. Chariot de manutention selon la revendication 1, **caractérisé en ce que** la plate-forme (22) est supportée en rotation sur 360° ou plus.

3. Moteur triphasé selon la revendication 1 ou la revendication 2, **caractérisé en ce que** la plate-forme est de forme circulaire et **en ce que** la partie surélevée (26) est formée en tant que tablier bombé vers l'extérieur qui est placé dans la zone marginale de la plate-forme (22) circulaire.

4. Chariot de manutention selon la revendication 3, **caractérisé en ce que** le tablier (26) présente une section transversale en forme d'arc de cercle.

5. Chariot de manutention selon la revendication 4, **caractérisé en ce que** le tablier (26) présente une zone (28) supérieure évasée dans le sens radial.

6. Chariot de manutention selon une des revendications 1 à 5, **caractérisé en ce que** la plate-forme est de forme circulaire et **en ce que** la plate-forme (22) de forme circulaire est entourée de façon annulaire par un tronçon de cadre.

7. Chariot de manutention selon une des revendications 1 à 6, **caractérisé en ce que** la plate-forme est de forme circulaire et **en ce que** la plate-forme (22) de forme circulaire présente approximativement la même hauteur que le côté supérieur du tronçon de cadre (18) entourant la plate-forme (22).

8. Chariot de manutention selon une des revendications 1 à 7, **caractérisé en ce que**, sur la plate-forme (22), sont supportées deux roues d'entraînement (42, 44) disposées de façon coaxiale et qui peuvent être entraînées par des moteurs d'entraînement séparés.

9. Chariot de manutention selon la revendication 8, **caractérisé en ce que** des roulettes menées (46, 48) sont supportées sur la plate-forme (22) ou sur le tronçon de cadre (18) à distance sur la circonférence des roues d'entraînement (42, 44).

10. Chariot de manutention selon une des revendications 1 à 7, **caractérisé en ce qu'**une roue d'entraînement unique est supportée approximativement de façon centrée au-dessous de la plate-forme (22), et **en ce qu'**il est prévu un entraînement rotatif séparé pour la plate-forme (22).

11. Chariot de manutention selon une des revendications 1 à 10, **caractérisé en ce que**, sur la partie surélevée (26), il est placé une poignée pour chaque main et sur laquelle sont disposés des éléments de manoeuvre pour le moteur d'entraînement et les moyens d'entraînement rotatifs.

12. Chariot de manutention selon la revendication 11, **caractérisé en ce que** les poignées sont constituées sous forme de manches (36, 38) dépassant vers le milieu.

13. Chariot de manutention selon la revendication 11 ou la revendication 12, **caractérisé en ce que** les poignées sont constituées sous forme de tronçons d'extrémité, recourbés vers le milieu, d'une tige (32) courbée en direction de la partie surélevée (26).

14. Chariot de manutention selon une des revendications 11 à 13, **caractérisé en ce que** les éléments de manoeuvre sont réalisés sous forme de commandes aux pouces.
